# EUROPÄISCHE PATENTSCHRIFT

(11) **EP 1 891 129 B1**
(45) Veröffentlichungstag und Bekanntmachung des Hinweises auf die Patenterteilung: **30.12.2015**
(21) Anmeldenummer: 06742913.4
(22) Anmeldetag: 13.05.2006
(51) Int. Cl.: C09D 175/02, B29C 45/16

(54) **LÖSUNGSMITTELFREIER BESCHICHTUNGSSTOFF FÜR IN-MOULD-COATING (IMC) UND VERFAHREN ZUR HERSTELLUNG**
SOLVENT-FREE COATING SUBSTANCE FOR IN-MOULD-COATING (IMC) AND METHOD FOR THE PRODUCTION THEREOF
SUBSTANCE DE REVÊTEMENT SANS SOLVENT DESTINÉE AU REVÊTEMENT DANS LE MOULE ET PROCÉDÉ DE FABRICATION

(30) Priorität: 17.05.2005 DE 102005023378; 21.04.2006 DE 102006019137
(43) Veröffentlichungstag der Anmeldung: 27.02.2008
(73) Patentinhaber: Panadur GmbH, 38820 Halberstadt (DE)
(72) Erfinder: BECK, Wolfgang, 38889 Blankenburg (DE); BECK, Andreas, 38889 Blankenburg (DE)
(74) Vertreter: Fischer, Volker
(86) Internationale Anmeldenummer: PCT/EP2006/004526
(87) Internationale Veröffentlichungsnummer: WO 2006/122730

(56) Entgegenhaltungen:
- DE-A1- 10 125 289
- DE-A1- 19 910 492
- US-A- 6 025 034
- US-A1- 2005 223 945
- US-B1- 6 291 070

## Beschreibung

Die vorliegende Erfindung betrifft einen lösungsmittelfreien Beschichtungsstoff für In-Mould-Coating (IMC) und ein Verfahren zur Herstellung von diesem. Es handelt sich um einen lichtechten, mit dem Beschichtungsobjekt schrumpfungskonformen und stoff-, form- und kraftschlüssigen Beschichtungsstoff auf der Basis eines mit Isocyanat vernetzbaren amino-funktionellen oder von seinen Derivaten ableitbaren Reaktionspartners als Bindemittel mit Primärteilchen im Sinne der Nanotechnologie.

Nach der DE 199 10 492 A1 sind ein lösungsmittelfreier Beschichtungsstoff auf der Basis eines reaktiven Polyurethans und einer neuen Polyurethandispersion, sowie ein Verfahren zur Herstellung von Mehrschichtlackierungen auf gegebenenfalls grundierten Substraten bekannt. Hiernach wurde ein neu gefundenes Polyurethan offenbart, welches herstellbar ist, indem man
- mindestens einen Polyester und/oder
- mindestens ein Polyether,
welche beide Ausgangsstoffe mindestens zwei gegenüber Isocyanaten reaktionsfähige funktionelle Gruppen aufweisen;
- mindestens ein Polyol und/oder
- mindestens ein Polyamin und/oder
- mindestens ein Alkanolamin
- mindestens eine Verbindung mit mindestens einer zur Anionenbildung befähigten funktionellen Gruppe und mindestens einer, insbesondere zwei, mit Isocyanaten reaktionsfähigen Gruppen;
- mindestens ein Polyisocyanat und/oder
- mindestens ein Polyisocyantaddukt;
- mindestens ein Blockierungsmittel für Isocyanatgruppen, welche bei einer bestimmten Reaktionstemperatur von den von ihnen blockierten Isocyanatgruppen wieder abgespaltet oder in Gegenwart der Vernetzungsmittel über eine Austauschreaktion wieder freigesetzt werden;
   sowie
- mindestens ein Neutralisationsmittel für die anionische Stabilisierung im wäßrigen Medium, welche anorganische und/oder organische Basen enthalten oder hieraus bestehen;
miteinander umgesetzt werden.

Nachteilig wirkt sich bei diesem vorgeschlagenen Beschichtungsstoff aus, dass er als lösemittelhaltig beschrieben wird und für die Trocknung 50 bis 155°C benötigt werden (Trockenzeit 20 Minuten bei 155°C und 42 µm Schichtdicke). Der Feststoffgehalt wird mit maximal 55 Gew.- % angegeben. Daher ist dieser Beschichtungsstoff für das IMC - Verfahren nicht geeignet. Den erfindungsgemäßen Beschichtungsstoff zeichnen dagegen 100 Gew.-% aus.

Nach der US 2003/0004265 A1 und auf dieser basierenden US 2003/0105220 A1 ist ein Beschichtungsmittel auf Basis von Polyurea, das ein Polyesterprodukt enthält, zur OberflächenBeschichtung (Top-Coat) für den Einsatz auf einem Schichtträger, bekannt. Dieses Beschichtungsmittel auf der Basis von Polyurea enthält zwei reaktive Bestandteile, und zwar als erste Komponente ein Isocyanat und als zweite Komponente ein niedrig viskoses aminofunktionelles Harz.

Dieses bekannte oberflächenverschließende Beschichtungsmittel auf der Basis von Polyurea ist beschreibungsgemäß ausschließlich als ein auf Oberflächen auftragbares Beschichtungssystem (Top-Coat) einsetzbar. Die Ursache hierfür liegt in der bezweckten, die Oberflächenhaftung begründenden Zusammensetzung dieses bekannten Beschichtungssystems auf frei zugängigen Oberflächen von bereits gestalteten Formkörpern nach deren Formgebung. Weiterhin ist dieses Beschichtungssystem nicht lösungsmittelfrei und eine mit diesem System beschichtete Oberfläche kann wegen der stofflichen Zusammensetzung nicht ohne Vorbehandlung überlackiert werden. Außerdem weisen diese Beschichtungsmittel keine antibakteriellen und Antifouling-Wirkungen auf.

Das Ziel der vorliegenden Erfindung ist es, neben der Erhöhung der Haftung eines lösungsmittelfreien Beschichtungsstoffes auf Oberflächen von Formkörpern während deren Herstellung aus isocyanatisch vernetzten Kunststoffen unter anderem in einer Form unter Vermeidung der Haftung auf den Wandungsoberflächen der Form durch Stoff-, Kraft- und Formschluß und Beschränkung der Schrumpfung des Anstrichauftrages auf die Schrumpfungsgröße des den Formkörper bildenden Kunststoffes mit einer homogenen Verteilung der dem Bindemittel zugegebenen Füllstoffe bei Sicherung einer Beständigkeit des Beschichtungsstoffes gegen UV-Strahlen eine antibakterielle Wirkung des Anstrichauftrages zu gewährleisten.

Der Erfindung liegt die Aufgabe zugrunde, einen lösungsmittelfreien und lichtbeständigen Beschichtungsstoff auf der Basis eines härtbaren Polymerisationsproduktes auf Aminbasis, das mit einem Isocyanat vernetzbar ist, mit einer antibakteriellen Wirkung, zu entwickeln und einen Beschichtungsstoff für die industrieelle Verarbeitung bereitzustellen, der während der Verarbeitung keine flüchtigen organischen Substanzen in Form von Lösungsmitteln freisetzt.

Diese Aufgabe wurde mit der in den unabhängigen Ansprüchen offenbarten Lehre gelöst. Erfindungsgemäß ist ein lösungsmittelfreier Beschichtungsstoff für In-Mould-Coat (IMC) vorgesehen, wobei "lösungsmittelfrei" heißt, dass der Beschichtungsstoff zu 100 Gewichtsprozent aus Beschichtungsstoff besteht und während seiner Verarbeitung weder getrocknet werden muss noch flüchtige organische Substanzen in Form von Lösungsmitteln freisetzt. Dieser lösungsmittelfreie Beschichtungsstoff ist auf der Basis eines aminofunktionellen Reaktionspartners für Isocyanate ausgebildet, wobei der lösungsmittelfreie Beschichtungsstoff aus zwei reaktiven Komponenten A und B gebildet ist, wovon die Komponente A aus einem aliphatischen Isocyanat und/oder dessen Abmischungen, und die Komponente B aus einem Anteil von 50 bis 90 % mit der Komponente A vernetzbarem Bindemittel auf der Basis eines aminofunktionellen Reaktionspartners und/oder dessen Abmischungen bestehen. Erfindungsgemäß enthält die Komponente B einen Anteil von 3 bis 40 % an nanoskalierbaren Füllstoffen, wobei eine Dispersion von nanoskalierten Füllstoffen, die nach einem Energieeintrag mittels Ultraschall im Leistungsbereich von 500 W bis 2000 W in Form von Primärteilchen in der Größe von 1 bis 10 nm vorliegen, 0 bis 7 % Stabilisatoren und 0 bis 3 % Hilfsstoffen vorgesehen ist.

Vorzugsweise enthält die Komponente A zusätzlich eine Vorvernetzung des Bindemittels bewirkende silanisierte und/oder aminische Isocyanate.

Gemäß einer vorteilhaften Ausgestaltung der Erfindung bilden die in der Komponente B enthaltenen nanoskalierten Füllstoffe spezifische Eigenschaften im Beschichtungsstoff aus. Diese bewirken nach Aushärtung eine Veränderung der Oberflächenhärte, Abrasivität, der UV-Stabilität oder dienen der Veränderung der elektrischen Leitfähigkeit, der Erzielung von Oberflächeneffekten und dem Erreichen einer fungiziden beziehungsweise einer Antifouling-Wirkung. Die zugegebenen Hilfsstoffe dienen vorteilhafterweise der Entlüftung, dem Entschäumen und/oder wirken als Trennmittel.

Als bevorzugte nanoskalierbare Füllstoffe sind zur Einstellung der Oberflächenhärte und der Abrasität Siliziumdioxid (SiO₂) und/oder Aluminiumoxid (Al₂O₃), zur Sicherung der UV-Stabilität Titan-(IV)-oxid (TiO₂), zur Erzielung von Oberflächeneffekten verschiedene Metalloxide, zum Erreichen einer fungiziden und einer Antifouling-Wirkung oberflächenbehandeltes Titan-(IV)-oxid (TiO₂), zur Ausbildung einer antibakteriellen, fungiziden Oberfläche nanoskalige metallisch reine Silberpartikel oder deren Salze in einer Konzentration von 10⁻³ bis 10⁻⁹ Mol/Liter, zur Erzielung der Leitfähigkeit zum Beispiel Eisenoxide, vorzugsweise Eisen-(II)-oxid (FeO), und/oder ein zu den Halbmetallen gehörendes Element, vorzugsweise Antimon (Sb) und Palladium (Pd), vorgesehen.

In einer weiteren Ausführungsform der Erfindung enthält der lösungsmittelfreie Beschichtungsstoff als Additive zur UV-Stabilisierung einen blockierten aminischen Lichtstabilisator.

Nach einer weiteren Ausgestaltung sind im erfindungsgemäßen lösungsmittelfreien Beschichtungsstoff als Flammschutzmittel nanoskalierbare Knochenmehle und deren Abmischungen, nanoskalige Keramikbildner und Wasserspender, wie zum Beispiel Magnesiumhydroxid, Aluminiumhydroxid oder Phosphate, vorgesehen.

Zur Unterstützung der Verarbeitbarkeit des Beschichtungsstoffes enthält dieser vorzugsweise als Hilfsstoffe zur Entlüftung und Entschäumung chemische Zuschlagstoffe mit einer Affinität zu Gasen und/oder ein das Haftvermögen an einer Formwandung minderndes internes oder externes Trennmittel und/oder einen thixotropen Einfluss ausübende und/oder den Feuchtigkeitsgehalt mindernde Hilfsstoffe in der reaktiven Komponente B.

Ein wesentlicher Vorteil des erfindungsgemäßen lösungsmittelfreien Beschichtungsstoffes besteht darin, dass zwischen dem lösungsmittelfreien, lichtechten Beschichtungsstoff und dem Beschichtungsobjekt eine stoff-, form- und kraftschlüssige Verbindung - auf der Basis des mit Isocyanat vernetzbaren aminofunktionellen Reaktionspartners und/oder von seinen Derivaten ableitbaren Reaktionspartners als Bindemittel und Primärteilchen im Sinne der Nanotechnologie - schrumpfungskonform vorliegt.

Ein weiterer Aspekt der vorliegenden Erfindung ist ein Verfahren gemäß Anspruch 8 zur Herstellung und Verarbeitung eines erfindungsgemäßen lösungsmittelfreien Beschichtungsstoffes nach einem der Ansprüche 1 bis 7 auf der Basis eines aminofunktionellen Reaktionspartners für Isocyanate. Bei dem Verfahren werden dem Bindemittel als Komponente B die nanoskalierbaren Füllstoffe, dann mindestens ein Additiv und mindestens ein Hilfsstoff zugemischt. Es erfolgt ein Energieeintrag mittels Ultraschall im Leistungsbereich von 500 W bis 2000 W, wobei dieser zur Generierung der Nanopartikel stufenweise über Dispergier-, Mahl- und Ultraschallprozesse vorgenommen wird. Zur Verarbeitung wird dann vor dem Versprühen im Sprühverfahren unter Druck durch die Komponente B nach dem Injektorprinzip die Komponente A der Komponente B als Vernetzungsmittel zugeführt, wobei beide Komponenten homogenisiert werden. Anschließend wird mittels hochpräziser Kolbendosieranlagen mit mechanisch selbstreinigenden Sprühmischköpfen eine Feinstverteilung des Beschichtungsstoffes mit sehr wenig Overspray erzielt und auf die vorgesehene Formwandung aufgetragen, wo es in kurzer Zeit zu einem Polyurea polymerisiert. Vorteilhafterweise wird dabei zwischen den Reaktionspartnern des Beschichtungsstoffes und dem des Formteils innerhalb von 24 Stunden nach dem Mischen der Komponenten A und B des Beschichtungsstoffes und dem Einbringen der Beschichtung in die Form und der darauffolgenden Ausformung der Form mit Formmasse an den sich berührenden Grenzschichten eine stoffschlüssige Verbindung herbeigeführt.

Vorteilhafterweise wird durch eine entsprechende Prozessführung eine thermische Überbelastung ausgeschlossen und eine maximale Grenzwerttemperatur von 65 °C nicht überschritten. Bei einem Eintrag von Ultraschallenergie sind zur Begrenzung einer thermischen Überbelastung insbesondere Kühlprozessschritte bei der Herstellung des Beschichtungsstoffes vorgesehen.

### Herstellungsbeispiel 1

Im Ansatzbehälter werden bis zu 35 % aminofunktionelles Bindemittel vorgelegt. Diesem Ansatz werden die Pigmente, Füllstoffe und Additive zugegeben und gemischt. Durch einen geeigneten, erfindungsgemäßen Energieeintrag in dieses System werden die entsprechenden Primärteilchen erzeugt. Danach werden die restlichen Bindemittelkomponenten zur 100%-Basis zugegeben und gemischt. In Abhängigkeit der eingesetzten Pigmente, Füllstoffe und Additive sind die notwendigen Temperaturparameter zu beachten. Ansonsten kann der Fachmann die Auswahl auf Grund des allgemein bekannten Standes der Technik gegebenenfalls nach Durchführung geeigneter Versuchsreihen treffen.

Erfindungsgemäß wird der Energieeintrag stufenweise über Dispergier-, Mahl- und Ultraschallprozesse vorgenommen, wobei durch eine entsprechende Prozessführung eine thermische Überbelastung ausgeschlossen ist und eine maximale Grenzwerttemperatur von 65 °C nicht überschritten wird. Zur Absicherung der Grenzwerttemperatur von 65 °C wird bei Eintrag von Ultraschallenergie bedarfsweise eine Kühlung schrittweise vorgenommen.

### Herstellungsbeispiel 2

Unter gleicher Vorgabe wie im Herstellungsbeispiel 1 können durch Zugaben von bekannten Flammschutzmitteln weitere Eigenschaften erzeugt werden.

Mit dem bereitgestellten erfindungsgemäßen Beschichtungsstoff ist eine Beschichtung von Formkörpern im sogenannten In-mould-Coating-Verfahren mit einer sehr geringen und gleichmäßigen Schichtstärke bei einer extrem hohen homogenen Verteilung der dem Bindemittel zugemischten Füllstoffe möglich. Der geringe erforderliche Beschichtungsauftrag garantiert eine fehlerfreie Beschichtungsoberfläche bei einer sehr kurzen Reaktionszeit der Reaktionskomponenten, wobei die erforderlichen Eigenschaften des Beschichtungsstoffes voll gewährleistet sind und sich sowohl in der Grenzschicht im Beschichtungsstoff zum Formteil hin als auch in der Grenzschicht im Formteil zum Beschichtungsstoff hin eine flächenförmige grenzschichtenübergreifende Verbindung durch Vernetzung der mit Isocyanat vernetzbaren Reaktionspartner des Beschichtungsstoffes und des Formteils ausbildet.

Die Ursache für diese Vorteile liegt auch in der gewählten Struktur des eingesetzten Füllstoffes. Der Einsatz von nanoskalierbaren Füllstoffen und/oder einer stabilen Dispersion von nanoskalierten Füllstoffen und Primärteilchen, Molekularsieben, Additiven und Pigmenten begründen diese Vorteile.

## Patentansprüche

1. Lösungsmittelfreier Beschichtungsstoff für In-Mould-Coat (IMC), wobei lösungsmittelfrei heißt, dass der Beschichtungsstoff zu 100 Gewichtsprozent aus Beschichtungsstoff besteht und während seiner Verarbeitung weder getrocknet werden muss noch flüchtige organische Substanzen in Form von Lösungsmitteln freisetzt, auf der Basis eines aminofunktionellen Reaktionspartners für Isocyanate, wobei der lösungsmittelfreie Beschichtungsstoff aus zwei reaktiven Komponenten A und B gebildet ist, wovon die Komponente A aus einem aliphatischen Isocyanat und/oder dessen Abmischungen und die Komponente B aus einem Anteil von 50 bis 90 % mit der Komponente A vernetzbarem Bindemittel auf der Basis eines aminofunktionellen Reaktionspartners und/oder dessen Abmischungen bestehen,
**dadurch gekennzeichnet, dass**
die Komponente B einen Anteil von 3 bis 40 % an nanoskalierbaren Füllstoffen enthält, wobei eine Dispersion von
- nanoskalierten Füllstoffen, die nach einem Energieeintrag mittels Ultraschall im Leistungsbereich von 500 W bis 2000 W in Form von Primärteilchen in der Größe von 1 bis 10 nm vorliegen,
- 0 bis 7 % Stabilisatoren und
- 0 bis 3 % Hilfsstoffen
vorgesehen ist.

2. Lösungsmittelfreier Beschichtungsstoff nach Anspruch 1,
**dadurch gekennzeichnet, dass**
die Komponente A zusätzlich eine Vorvernetzung des Bindemittels bewirkende silanisierte und/oder aminische Isocyanate enthält.

3. Lösungsmittelfreier Beschichtungsstoff nach Anspruch 1 oder 2,
**dadurch gekennzeichnet, dass**
die in der Komponente B enthaltenen nanoskalierten Füllstoffe spezifische Eigenschaften im Beschichtungsstoff ausbilden, die nach Aushärtung eine Veränderung der Oberflächenhärte, Abrasivität, der UV-Stabilität bewirken oder der Veränderung der elektrischen Leitfähigkeit, der Erzielung von Oberflächeneffekten und dem Erreichen einer fungiziden und/oder einer Antifouling-Wirkung dienen und die zugegebenen Hilfsstoffe der Entlüftung, dem Entschäumen dienen und/oder als Trennmittel wirken.

4. Lösungsmittelfreier Beschichtungsstoff nach Anspruch 3,
**dadurch gekennzeichnet, dass**
als nanoskalierbare Füllstoffe zur Einstellung der Oberflächenhärte und der Abrasität Siliziumdioxid (SiO₂) und/oder Aluminiumoxid (Al₂O₃), zur Sicherung der UV-Stabilität Titan-(IV)-oxid (TiO₂), zur Erzielung von Oberflächeneffekten verschiedene Metalloxide, zum Erreichen einer fungiziden und einer Antifouling-Wirkung oberflächenbehandeltes Titan-(IV)-oxid (TiO₂), zur Ausbildung einer antibakteriellen, fungiziden Oberfläche nanoskalige metallisch reine Silberpartikel oder deren Salze in einer Konzentration von 10⁻³ bis 10⁻⁹ Mol/Liter, zur Erzielung der Leitfähigkeit Eisenoxide, vorzugsweise Eisen-(II)-oxid (FeO), und/oder ein zu den Halbmetallen gehörendes Element, vorzugsweise Antimon (Sb) und Palladium (Pd), vorgesehen sind.

5. Lösungsmittelfreier Beschichtungsstoff nach einem der Ansprüche 1 bis 4,
**dadurch gekennzeichnet, dass**
dieser als Additive zur UV-Stabilisierung einen blockierten aminischen Lichtstabilisator enthält.

6. Lösungsmittelfreier Beschichtungsstoff nach Anspruch 1,
**dadurch gekennzeichnet, dass**
als Flammschutzmittel nanoskalierbare Knochenmehle und deren Abmischungen, nanoskalige Keramikbildner und Wasserspender, vorzugsweise Magnesiumhydroxid, Aluminiumhydroxid oder Phosphate, vorgesehen sind.

7. Lösungsmittelfreier Beschichtungsstoff nach Anspruch 1,
**dadurch gekennzeichnet, dass**
dieser zur Unterstützung der Verarbeitbarkeit des Beschichtungsstoffes als Hilfsstoffe zur Entlüftung und Entschäumung chemische Zuschlagstoffe mit einer Affinität zu Gasen und/oder ein das Haftvermögen an einer Formwandung minderndes internes oder externes Trennmittel und/oder einen thixotropen Einfluss ausübende und/oder den Feuchtigkeitsgehalt mindernde Hilfsstoffe in der reaktiven Komponente B enthält.

8. Verfahren zur Herstellung und Verarbeitung eines lösungsmittelfreien Beschichtungsstoffes auf der Basis eines aminofunktionellen Reaktionspartners für Isocyanate nach einem der Ansprüche 1 bis 7,
**dadurch gekennzeichnet, dass**
dem Bindemittel als Komponente B die nanoskalierbaren Füllstoffe, dann mindestens ein Additiv und mindestens ein Hilfsstoff zugemischt werden und ein Energieeintrag mittels Ultraschall im Leistungsbereich von 500 W bis 2000 W erfolgt, wobei dieser zur Generierung der Nanopartikel stufenweise über Dispergier-, Mahl- und Ultraschallprozesse vorgenommen wird und dann zur Verarbeitung vor dem Versprühen im Sprühverfahren unter Druck durch die Komponente B nach dem Injektorprinzip die Komponente A der Komponente B als Vernetzungsmittel zugeführt wird und dabei beide Komponenten homogenisiert werden und anschließend mittels hochpräziser Kolbendosieranlagen mit mechanisch selbstreinigenden Sprühmischköpfen eine Verteilung des Beschichtungsstoffes erzielt und auf die vorgesehene Formwandung aufgetragen wird und dort zu einem Polyurea polymerisiert.

9. Verfahren nach Anspruch 8,
**dadurch gekennzeichnet, dass**
durch eine entsprechende Prozessführung eine thermische Überbelastung ausgeschlossen und eine maximale Grenzwerttemperatur von 65 °C nicht überschritten wird.

10. Verfahren nach Anspruch 9,
**dadurch gekennzeichnet, dass**
bei einem Eintrag von Ultraschallenergie zur Begrenzung einer thermischen Überbelastung Kühlprozessschritte bei der Herstellung des Beschichtungsstoffes vorgesehen sind.

## Claims

1. Solvent-free coating material for in-mould coating (IMC) - where solvent-free means that the coating material consists to an extent of 100 per cent by weight of coating material and in the course of its processing neither requires drying nor releases volatile organic substances in the form of solvents
- based on an amino-functional reaction partner for isocyanates, the solvent-free coating material being formed of two reactive components A and B, of which component A consists of an aliphatic isocyanate and/or blends thereof, and component B consists of a fraction of 50% to 90% of binder which is crosslinkable with component A and which is based on an amino-functional reaction partner and/or blends thereof,
**characterized in that**
component B includes a fraction of 3% to 40% of nanoscaleable fillers, a dispersion being provided of
- nanoscaled fillers which after energy input by means of ultrasound in the power range from 500 W to 2000 W are present in the form of primary particles in a size of 1 to 10 nm,
- 0% to 7% of stabilizers and
- 0% to 3% of auxiliaries.

2. Solvent-free coating material according to Claim 1,
**characterized in that**
component A further comprises silanized and/or aminic isocyanates which bring about preliminary crosslinking of the binder.

3. Solvent-free coating material according to Claim 1 or 2,
**characterized in that**
the nanoscaled fillers present in component B develop specific properties in the coating material which after curing bring about a modification of the surface hardness, abrasiveness, or UV stability or serve for modifying the electrical conductivity, for obtaining surface effects and for achieving a fungicidal and/or antifouling activity, and the auxiliaries added serve for removing air or removing foam and/or act as release agents.

4. Solvent-free coating material according to Claim 3,
**characterized in that**
nanoscaleable fillers provided are silicon dioxide (SiO₂) and/or aluminium oxide (Al₂O₃) for adjusting the surface hardness and the abrasiveness, titanium(IV) oxide (TiO₂) for securing the UV stability, various metal oxides for obtaining surface effects, surface-treated titanium(IV) oxide (TiO₂) for achieving a fungicidal and antifouling activity, nanoscale, metallically pure silver particles or salts thereof in a concentration of 10⁻³ to 10⁻⁹ mol/litre for developing an antibacterial, fungicidal surface, iron oxides, preferably iron (II) oxide (FeO), and/or an element belonging to the semi-metals, preferably antimony (Sb) and palladium (Pd), for obtaining the conductivity.

5. Solvent-free coating material according to any of Claims 1 to 4,
**characterized in that**
as additives for UV stabilizing it comprises a blocked aminic light stabilizer.

6. Solvent-free coating material according to Claim 1,
**characterized in that**
flame retardants provided are nanoscaleable, finely ground bones and blends thereof, nanoscale ceramic-formers and water donors, preferably magnesium hydroxide, aluminium hydroxide or phosphates.

7. Solvent-free coating material according to Claim 1,
**characterized in that**
it comprises in the reactive component B, for supporting the processability of the coating material, as auxiliaries for air removal and foam removal, chemical adjuvants with an affinity for gases, and/or an internal or external release agent which lessens the adhesiveness to a mould wall, and/or auxiliaries which exert a thixotropic influence and/or lessen the moisture content.

8. Method for producing and processing a solvent-free coating material based on an amino-functional reaction partner for isocyanates according to any of Claims 1 to 7,
**characterized in that**
the nanoscaleable fillers, then at least one additive and at least one auxiliary are admixed as component B to the binder and an energy input takes place by means of ultrasound in the power range from 500 W to 2000 W, this operation being performed in order to generate the nanoparticles in stages via dispersing, grinding and ultrasound operations, and then for processing prior to spraying in a spraying process under pressure through component B, component A is supplied to component B as crosslinking agent, according to the injector principle, in the course of which the two components are homogenized, followed by distribution of the coating material by means of high-precision piston metering units with mechanically self-cleaning spray mixing heads, application taking place to the intended mould wall, where polymerization takes place to give a polyurea.

9. Method according to Claim 8,
**characterized in that**
thermal overload is prevented by a corresponding operating regime and a maximum limiting value temperature of 65°C is not exceeded.

10. Method according to Claim 9,
**characterized in that**
in the case of an input of ultrasound energy, cooling operating steps are envisaged in order to limit thermal overload during the production of the coating material.

## Revendications

1. Substance de revêtement sans solvant pour revêtement dans le moule (en anglais In-Mould-Coat (IMC)), sans solvant signifiant que la substance de revêtement est composée à 100 pour 100 en poids de substance de revêtement et n'a pas besoin d'être séchée ni ne libère de substances organiques volatiles sous la forme de solvants pendant sa mise en oeuvre, à base d'un partenaire réactionnel aminofonctionnel pour les isocyanates, la substance de revêtement sans solvant étant formée de deux composants réactifs A et B, dont le composant A est composé d'un isocyanate aliphatique et/ou de ses mélanges et le composant B d'une proportion de 50 à 90 % d'un liant réticulable avec le composant A à base d'un partenaire réactionnel aminofonctionnel et/ou de ses mélanges, **caractérisée en ce que**
le composant B contient une proportion de 3 à 40 % de substances de remplissage pouvant être mises à l'échelle nanométrique, une dispersion de
- substances de remplissage à l'échelle nanométrique qui, après un apport d'énergie au moyen d'ultrasons dans la plage de puissance de 500 W à 2000 W, sont présentes sous la forme de particules primaires d'une taille de 1 à 10 nm,
- 0 à 7 % de stabilisateurs et
- 0 à 3 % de substances auxiliaires
étant prévue.

2. Substance de revêtement sans solvant selon la revendication 1,
**caractérisée en ce que**
le composant A contient en plus des isocyanates silanisés et/ou aminés produisant une préréticulation du liant.

3. Substance de revêtement sans solvant selon l'une des revendications 1 ou 2,
**caractérisée en ce que**
les substances de remplissage à l'échelle nanométrique contenues dans le composant B créent des propriétés spécifiques dans la substance de revêtement, qui, après durcissement, produisent une modification de la dureté de surface, de l'abrasivité, de la stabilité aux UV ou servent à modifier la conductibilité électrique, à obtenir des effets de surface et à atteindre une action fongicide et/ou antisalissure, et les substances auxiliaires ajoutées servent à la purge d'air, au démoussage et/ou agissent comme agent de démoulage.

4. Substance de revêtement sans solvant selon la revendication 3,
**caractérisée en ce que**
sont prévus comme substances de remplissage pouvant être mises à l'échelle nanométrique pour régler la dureté de surface et l'abrasivité du dioxyde de silicium (SiO₂) et/ou de l'oxyde d'aluminium (Al₂O₃), pour assurer la stabilité aux UV de l'oxyde de titane (IV) (TiO₂), pour obtenir des effets de surface différents oxydes métalliques, pour atteindre une action fongicide et/ou antisalissure de l'oxyde de titane (IV) (TiO₂) traité en surface, pour former une surface antibactérienne et fongicide des particules d'argent métallique pur à l'échelle nanométrique ou de leurs sels dans une concentration de 10⁻³ à 10⁻⁹ mol/litre, pour obtenir la conductibilité des oxydes de fer, de préférence de l'oxyde de fer (II) (FeO), et/ou un élément appartenant aux métalloïdes, de préférence de l'antimoine (Sb) et du palladium (Pd).

5. Substance de revêtement sans solvant selon l'une des revendications 1 à 4,
**caractérisée en ce que**
celle-ci contient un photostabilisateur aminé bloqué comme additif pour la stabilisation aux UV.

6. Substance de revêtement sans solvant selon la revendication 1,
**caractérisée en ce que**
de la farine d'os pouvant être mise à l'échelle nanométrique et ses mélanges, des matières formant une céramique et des composés capables de libérer de l'eau à l'échelle nanométrique, de préférence de l'hydroxyde de magnésium, de l'hydroxyde d'aluminium ou des phosphates, sont prévus comme agents ignifuges.

7. Substance de revêtement sans solvant selon la revendication 1,
**caractérisée en ce que**
celle-ci contient dans le composant réactif B, pour soutenir l'aptitude à la mise en oeuvre de la substance de revêtement, comme substances auxiliaires pour la purge d'air et le démoussage des additifs chimiques ayant une affinité pour les gaz et/ou un agent de démoulage interne ou externe réduisant l'adhérence à une paroi de moule et/ou des substances auxiliaires exerçant une influence thixotropique et/ou réduisant la teneur en humidité.

8. Procédé de fabrication et de mise en oeuvre d'une substance de revêtement sans solvant à base d'un partenaire réactionnel aminofonctionnel pour les isocyanates selon l'une des revendications 1 à 7,
**caractérisé en ce que**
au liant formant le composant B sont ajoutés les substances de remplissage pouvant être mises à l'échelle nanométrique, puis au moins un additif et au moins une substance auxiliaire et un apport d'énergie au moyen d'ultrasons dans la plage de puissance de 500 W à 2000 W a lieu, celui-ci étant effectué pour générer les nanoparticules par paliers par des procédés de dispersion, de broyage et par ultrasons, et ensuite, pour la mise en oeuvre, avant la pulvérisation par pulvérisation sous pression à travers le composant B selon le principe de l'injecteur, le composant A est ajouté au composant B comme agent de réticulation, les deux composants étant ce faisant homogénéisés, et ensuite une répartition de la substance de revêtement est réalisée au moyen d'installations de dosage par piston de haute précision avec des têtes de mélange et de pulvérisation autonettoyantes mécaniquement et appliquée sur la paroi de moule prévue où elle polymérise en une polyurée.

9. Procédé selon la revendication 8,
**caractérisé en ce que**
une conduite de procédé appropriée permet d'exclure une surcharge thermique et de ne pas dépasser une température limite maximale de 65 °C.

10. Procédé selon la revendication 9,
**caractérisé en ce que**
lors d'un apport d'énergie ultrasonore, des étapes de procédé de refroidissement pour limiter une surcharge thermique sont prévues lors de la fabrication de la substance de revêtement.
